# EUROPEAN PATENT SPECIFICATION

(11) **EP 4 130 644 B1**
(45) Date of publication and mention of the grant of the patent: **21.02.2024**
(21) Application number: 22186938.1
(22) Date of filing: 26.07.2022
(51) Int. Cl.: F41H 5/013, F41H 5/06, F41H 5/24

(54) **SUPPORT LEG FOR A BALLISTIC SHIELD, AND A BALLISTIC SHIELD WITH A SUPPORT LEG**
STÜTZFUSS FÜR EINEN BALLISTISCHEN SCHILD UND BALLISTISCHER SCHILD MIT EINEM STÜTZBEIN
PIED DE SUPPORT POUR UNE PROTECTION BALISTIQUE ET PROTECTION BALISTIQUE DOTÉE D'UN PIED DE SUPPORT

(30) Priority: 04.08.2021 FI 20215834
(43) Date of publication of application: 08.02.2023
(73) Proprietor: Sioen Ballistics Oy, 00700 Helsinki (FI)
(72) Inventor: PIETILÄ, Jarno, 01700 Vantaa (FI)
(74) Representative: Berggren Oy

(56) References cited:
- US-A1- 2013 340 603
- US-A1- 2017 038 179
- US-B1- 7 152 517

## Description

### Field of the invention

The invention relates to a support leg for a ballistic shield, and a ballistic shield with a support leg.

### Background of the invention

In various shooting or bomb threat situations, various bullet-proof and splinter-proof ballistic shields are used for protecting persons from bullets, explosion fragments and other possible objects flying at a high speed. To provide appropriate protection, the ballistic shields have to extend over a sufficiently large surface area and to consist of a sufficiently strong material. Consequently, the ballistic shields are, in practice, usually so heavy that carrying and holding them in an upright position merely manually for a sufficiently long time in, for example, the above-mentioned situations is quite burdensome for the person using the ballistic shield. For this reason, various support legs have been developed, which may be carried along and fastened separately to the ballistic shield or be integrated in the ballistic shield, to keep the ballistic shield in a vertical position against the ground without carrying and supporting it manually.

A known support leg of the above described type for a ballistic shield is presented in, for example, US patent application publication No. 2017/038179A1. It describes a telescoping and retractable support leg which can be mounted to a shield so that the shield can be supported in a vertical position on the ground, at a height suitable for a person to be protected. For transportation, the support leg can be brought into a more compact transport position by adjusting the telescopic head tubes of the support leg to the shortest position.

A disadvantage of portable support legs of prior art for a shield is that they are difficult to use and/or that the support they provide for the shield is often not sufficient to keep the shield firmly upright when merely supported by the support legs for the shield. Particularly on uneven and/or sloping terrain, the support provided by support legs of prior art is in many cases not sufficient to keep the shield upright without supporting it so as to prevent it from coming down either on its own or by the effect of bullets, fragments or other objects flying at a high speed. Furthermore, when brought into the transport position, support legs of prior art for shields make it difficult to carry the shield and often make noise, because of the methods of attachment and the principles of operation of the adjustable/separate parts in them. A possibility to move silently is important, for example, in a situation in which an armed and dangerous person or group of persons is a threat to bystanders and/or has to be stopped by authorities as inconspicuously as possible.

### Brief summary of the invention

It is an aim of the invention to provide a novel support leg for a ballistic shield, which leg is compact, as light-weight as possible and easy to carry with the shield, but which can be used to support the shield firmly in an upright position against the ground. Another aim of the invention is to provide a support leg for a ballistic shield, which leg is adjustable in a versatile way as well easily and quickly convertible from a transport position to a supporting position and back to the transport position, but which in the transport position is compact and silent when carried/transported with the shield. Yet another aim of the invention is to present a ballistic shield with a support leg, the shield applying the support leg according to the invention.

The aim of the invention is achieved with a support leg for a ballistic shield, and a ballistic shield with a support leg, wherein the support leg for the ballistic shield can be turned to different positions with respect to the shield, and easily locked in these different positions by a mechanism that is quickly releasable and lockable, and which comprises a leg portion which is fastened to a frame portion attachable to the shield and comprises an auxiliary support telescopically extendible in the direction of the ground surface for bringing the leg portion from a compact transport position to a supporting position which is well supported to the ground and provides a good support for the ballistic shield. To put it more precisely, the support leg for a ballistic shield according to the invention is characterized in what will be presented in the independent claim 1. The ballistic shield with a support leg is characterized in what will be presented in the independent claim 15. Dependent claims 2 to 14 present some preferred embodiments of the support leg for a ballistic shield according to the invention.

In the support leg for a ballistic shield, the frame portion to be fastened to the shield is turnable and lockable in different positions in a releasable way, and the leg portion is telescopically extendible and retractable in the direction of the ground surface; therefore, the support leg for the ballistic shield according to the invention is stable and supports the shield well in its supporting position, whereby the shield can be supported in an upright position also on uneven terrain and on a slanted surface so firmly that bullets, explosion fragments or other similar objects flying at a high speed and hitting the ballistic shield cannot knock down the shield and thereby render the user of the shield unprotected. Moreover, the support leg for a ballistic shield according to the invention has the advantage that, thanks to its structure and the above described principle of operation, it can be easily and quickly converted from the transport position to the supporting position and from the supporting position back to the transport position, and it is, in the transport position, compact and silent when carried/transported from one place to another.

### Description of the drawings

In the following, the invention will be described in more detail with reference to the appended drawings, in which
Fig. 1 shows a support leg for a ballistic shield according to the invention in a supporting position, in a slanted view from above;
Fig. 2 shows the support leg for a ballistic shield according to Fig. 1 in the supporting position, in a slanted view from below;
Fig. 3 shows the support leg for a ballistic shield according to the preceding figures seen from the front;
Fig. 4 shows the support leg for a ballistic shield according to the preceding figures seen from behind;
Fig. 5 shows the support leg for a ballistic shield according to the preceding figures in the supporting position, seen from the side;
Fig. 6 shows the cross-section A-A of the support leg for a ballistic shield according to the preceding figures, as shown in Fig. 4, the leg for the shield being in the supporting position;
Fig. 7 shows the cross-section A-A of the support leg for a ballistic shield according to the preceding figures, as shown in Fig. 4, the leg for the shield being in the transport position;
Fig. 8 shows part B of the cross-section shown in Fig. 6 in a more detailed view;
Fig. 9 shows a ballistic shield in a slanted view from above, with two support legs according to the preceding figures attached to the shield when the support legs for the shield are in the transport position;
Fig. 10 shows a ballistic shield in a slanted view from above, with two support legs according to the preceding figures attached to the shield when the support legs for the shield are in the supporting position;
Fig. 11 shows another support leg for a ballistic shield according to the invention, in a slanted view from above; and
Fig. 12 shows a ballistic shield in a slanted view from above, with two support legs according to Fig. 11 attached to the shield when the support legs for the shield are in the supporting position.

### Detailed description of preferred embodiments of the invention

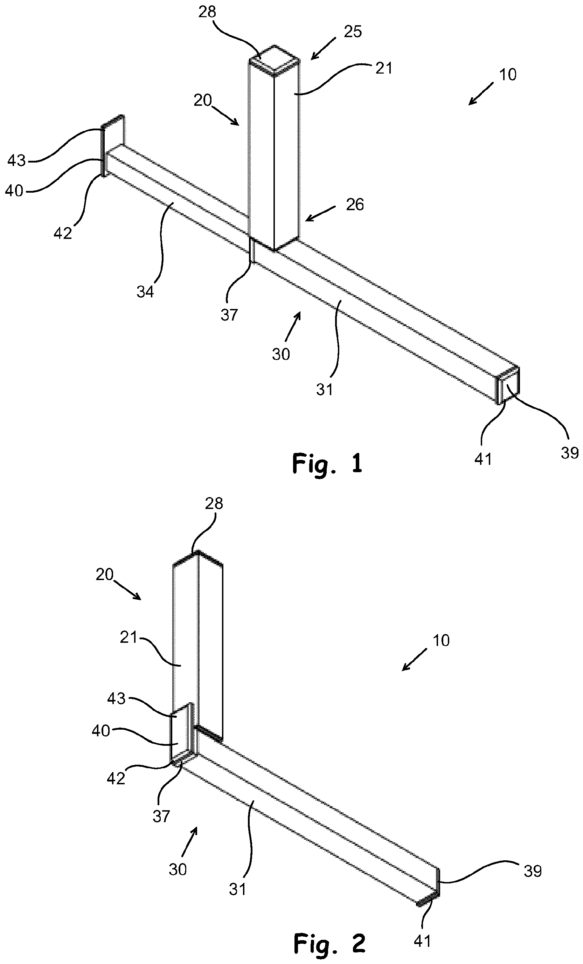

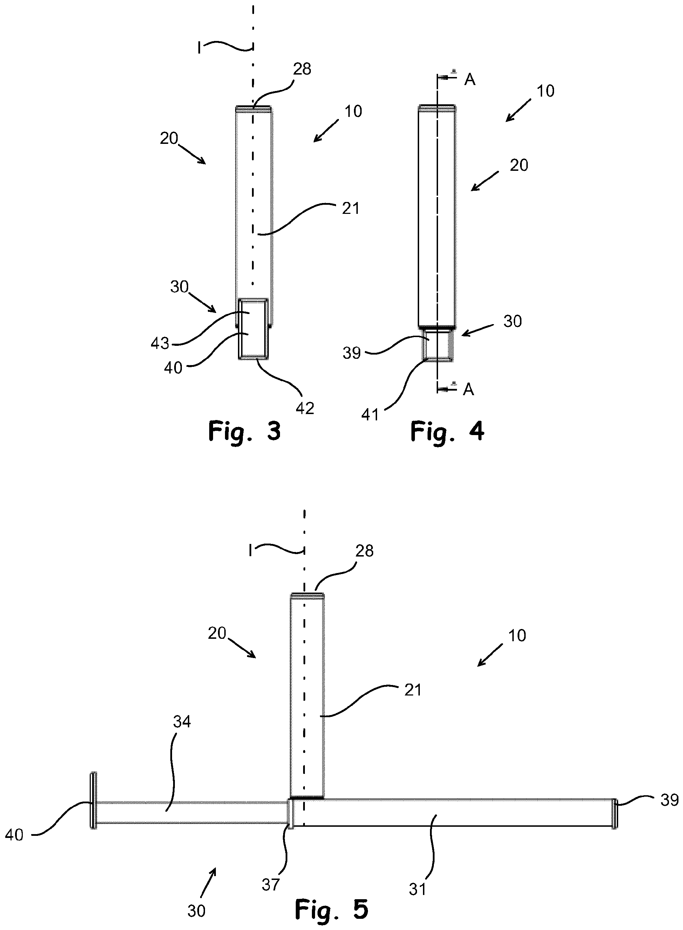

Figures 1 to 8 show a support leg 10 according to the invention for a ballistic shield. It comprises a frame portion 20 attachable to the ballistic shield and having a first end 25 and a second end 26. It also comprises a leg portion 30 fastened to the second end 26 of the frame portion 20, to be placed against the ground. The function of the leg portion 30 is to keep the frame portion 20 in an upright position with respect to the ground. Therefore, the frame portion 20 is fastened to the leg portion in a substantially perpendicular position so that when the leg portion 30 is in a horizontal position, the frame portion 20 is in a vertical position, the first end 25 of the frame portion pointing straight upward.

The frame portion 20 and the leg portion 30 of the support leg 10 for a ballistic shield according to the invention may be made of metal, such as aluminium or stainless steel. However, both the frame portion 20 and the leg portion 30 comprise elements which are made of *e.g.* plastic or metal different from the other parts of the frame portion 20 and/or the leg portion 30, or any other suitable material of sufficient strength (*e.g.* composite, carbon fibre, or glass fibre). Also, the frame portion 20 and the leg portion 30 may be made of, in principle, any suitable material, of which a structure of the described type can be formed by manufacturing methods suitable for treating, forming and fastening said material. In embodiments similar to the embodiment of Figs. 1 to 8, however, the frame portion 20 and the leg portion 30 are preferably made of a non-ferromagnetic material, because permanent magnets are used for implementing their operation, whereby a ferromagnetic material in the frame portion 20 and in the leg portion 30 would disturb the operation of the support leg 10 for the ballistic shield.

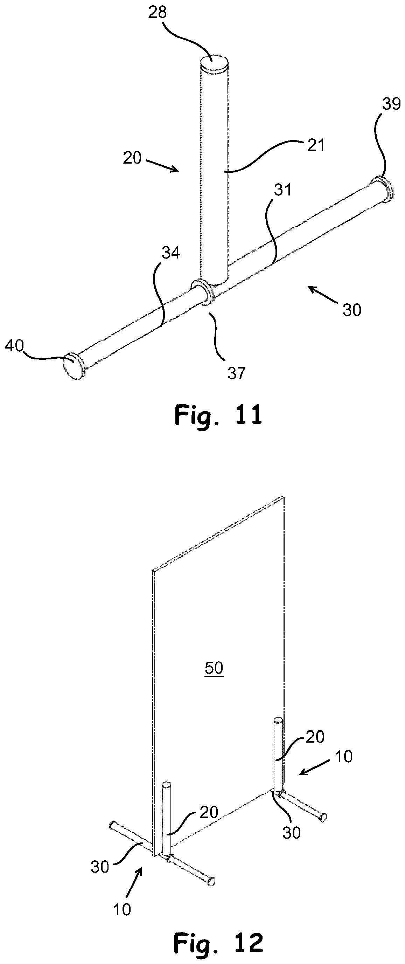

In the embodiment shown in Figs. 1 to 8, the frame portion 20 is a tubular elongated piece having a rectangular cross-section and a first end 25 and a second end 26. However, it may also be a tubular piece having a cross-section which is *e.g.* circular (as shown in the embodiment of Fig. 11) or of a different shape, but in some embodiments it may also, in principle, have a cross-sectional shape with an open or partly open profile or be a different elongated piece suitable for the purpose.

In the embodiment of Figs. 1 to 8, the frame portion 20 comprises a shield fastener 21 which can be fastened to it in a detachable way and used for fastening the shield to the frame portion 20, to be turnable or rotatable in at least two different positions with respect to the longitudinal direction I of the frame portion 20, and to be locked in each of these different positions in a releasable way.

In the embodiment of Figs. 1 to 8, the shield fastener 21 is a tubular piece having a rectangular cross-section and accommodating a separate spacer 22 fastened to the shield fastener 21 (by means of *e.g.* adhesive and/or an interference fit). At its end on the side of the second end 26 of the frame portion, the spacer 22 has a rectangular inner shape, and from there towards the first end 25 of the frame portion, it has a circular shape.

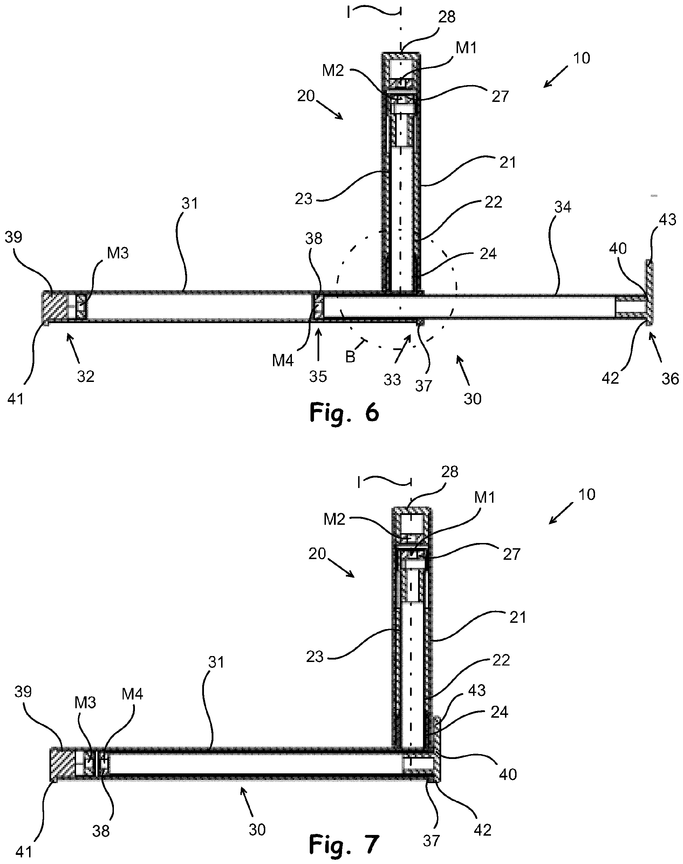

In addition to the shield fastener 21, the frame portion comprises a position fastener 23 fitted in the shield fastener 21 as shown in Figs. 6 to 8. In the lower part of the position fastener 23, a part is provided, whose outer cross-section is rectangular and whose cross-section inside the spacer 22 is rectangular in the section between the shield fastener 21 and the position fastener 23, and inside this part, a position lock 24 with a rectangular inner cross-section is fitted without clearance but to be movable in the longitudinal direction of the frame portion 20, to extend a space from the lower part of the position fastener 23 in the direction of the first end 25 of the frame portion (*i.e.* upward when the leg portion 30 leans against the ground). Consequently, the position lock 24 together with the lower part of the spacer 22 constitutes a shape interlocking to prevent the turning of the shield fastener 21 in relation to the longitudinal axis I of the frame portion 20 when the shield fastener 21 (and the spacer 22 accommodated in it) is fitted on the position fastener 23 so that the position fastener 23 is left at least partly inside the shield fastener 21 (*i.e.* the end of the shield fastener 21 on the side of the second end 26 of the frame portion and the end of the position fastener 23 on the side of the second end 26 of the frame portion are aligned or so close to each other that the lower part of the spacer 22 is fitted in the position lock 24).

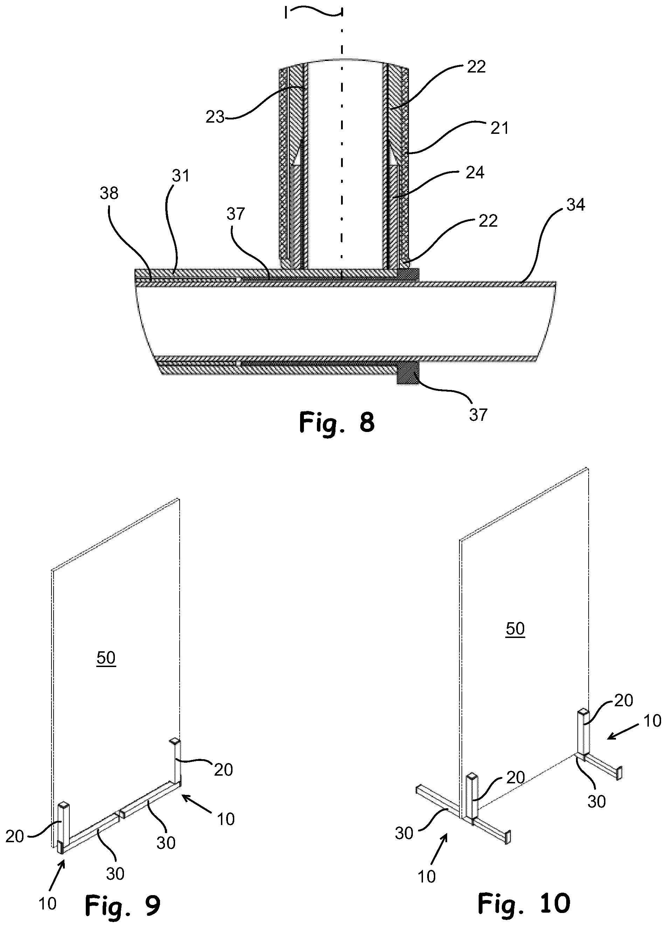

The part of the position fastener 23 on the side of the first end 25 of the frame portion has a circular outer cross-section, as has the inner part of the shield fastener 21 following the rectangular inner cross-section (*i.e.* the part on the side of the first end 25 of the frame portion), in which part said part of the position fastener 23 fits without clearance, to be movable and turnable with respect to the longitudinal axis I of the frame portion 20. Consequently, the position lock 24 does not, however, prevent the turning of the shield fastener 21 in relation to the longitudinal axis of the frame portion 20 if the shield fastener 21 is moved in the direction of the first end 25 of the frame portion (*i.e.* lifted upwards) so that the shield fastener 21 moves outside the position lock 24 with respect to the position fastener 23, thereby releasing the shape interlocking provided by the position lock 24 and preventing the turning. In the embodiment according to Figs. 1 to 8, an end piece fastener 27, provided at the end of the position fastener 21 on the side of the first end 25 of the frame portion, and the spacer 22 inside the shield fastener 21 are implemented so that the shield fastener 21 cannot, however, rise totally apart from the position fastener 23 and thereby become completely loose from the other parts of the support leg 10 for the shield. Thus, the frame portion 20 of the embodiment shown in Figs. 1 to 8 makes it possible that the position of the shield fastener 21 and thereby the leg portion 30 can be changed with respect to the shield fastener 21 and the shield attached to it by lifting the shield fastener 21 (and the shield) above the position lock 24 and by then turning it in a desired direction with respect to the longitudinal axis I of the frame portion. For example, in the transport position shown in Fig. 9, the shield fastener 21 is turned 90 degrees so that the leg portion 30 is arranged in parallel with the shield 50, below the lower edge of the shield 50. In this way, the turnability of the shield fastener 21 makes it possible to arrange the support leg 10 for the shield in a configuration that takes very little space in the transport position. Alternatively, the locking of the position of the shield fastener 21 corresponding to the above description can, in this and another embodiment of the support leg for a shield according to the invention, be implemented by a different mechanical locking solution as well. One might be, for example, a mechanical position locking formed by several grooves extending from the lower edge of the shield fastener and corresponding pins in the position fastener. Thus, the shield fastener can be brought into different positions by lifting the shield fastener so that the pin (*i.e.* the position lock) in the position fastener is moved off the groove at the lower edge of the shield fastener, after which the shield fastener can be turned and the pin can be fitted in another groove corresponding to another position of the shield fastener. This kind of an embodiment is well suited for frame portions having *e.g.* a circular cross-section, and for corresponding shield fasteners having a circular cross-section. On the other hand, in a locking mechanism of the type of the embodiment shown in Figs. 1 to 8, it is possible to apply a position lock and a shield fastener in which the cross-section of the position lock is, for example, hexagonal, octagonal or has more angles, and a corresponding shield fastener with a suitable inner shape, whereby the support leg for the shield can be locked in more than two positions with respect to the shield.

For keeping the shield fastener 21 stationary, fitted in the position lock 24, the shield fastener in the embodiment of Figs. 1 to 8 comprises an end piece 28 fastened to the end of the shield fastener 21 on the side of the first end 25 of the frame portion and attached to the end of the position fastener 23 on the side of the first end 25 of the frame portion in a detachable way, when the shield fastener 21 is fitted to the bottom of the position fastener 23. For fastening the end piece 28 to the first end of the frame portion in detachable way as described above, the end piece in the embodiment of Figs. 1 to 8 is provided with a magnet M1, by which the end piece 28 is attached to the first end of the position fastener 23 which, in turn comprises an end piece fastener 27 provided with another magnet M2, to which the magnet M1 of the end piece is fastened, because this magnet is fastened to the end piece 28 in such a way that the opposing *i.e.* attractive poles of these magnets M1 and M2 will come against each other. Consequently, in the embodiment of Figs. 1 to 8, the end piece 28 of the shield fastener 21 and the end piece fastener 27 of the position fastener 23 keep the shield fastener 21 stationary, locked in the position lock 24, so that the shield fastener 21 can still be moved in the direction of the first end 25 of the frame portion when this is pulled in the direction of the first end 25 of the frame portion by a force greater than the attraction between the magnets M1 and M2. In the embodiment of Figs. 1 to 8, the end piece fastener 27 is attached to the upper end (*i.e.* the end on the side of the first end 25 of the frame portion) of the position fastener 23 left within the shield fastener 21. However, the detachable attachment of the shield fastener to the first end of the frame portion, as described above, may also be implemented in another suitable way (*e.g.* by a mechanical locking) in the embodiment of Figs. 1 to 8 as well as in other embodiments of the support leg for the shield according to the invention. When using a magnet attachment of the type of the embodiment shown in Figs. 1 to 8, one of the magnets M1 or M2 may be replaced by another piece of a ferromagnetic material or by making the end piece of the end piece fastener attached to it, or the corresponding part of the first end of the frame portion inside the shield fastener, of a ferromagnetic material. Moreover, it is not necessary to use a separate end piece and/or an end piece fastener, but a corresponding function can be provided by fastening the magnet/magnets directly to the ends of the position fastener and the shield fastener in the above described way.

In the embodiment of Figs. 1 to 8, the leg portion 30 is permanently fixed to the second end of the frame portion 20 by *e.g.* welding, but in this or another embodiment it may also be fastened detachably by *e.g.* screws or other detachable fastening means to be installed between the frame portion 20 and the leg portion 30.

The leg portion 30 comprises an elongated leg frame 31 with a first end 32 and a second end 33 and correspondingly an auxiliary support 34 with a first end 35 and a second end 36. In the embodiment of Figs. 1 to 8, the leg frame 31 and the auxiliary support 34 are pipes with a rectangular cross-section so that the auxiliary support 34 is a tubular piece with outer dimensions fitting in the leg frame 31. The leg frame 31 and the auxiliary support 34 may also be tubular pieces with a different cross-sectional shape (*e.g.* pipes with a circular cross-section as in the embodiment of Fig. 11) or other elongate pieces which are fitted in connection with the leg frame 31 to be telescopically movable with respect to the leg frame 34 in the longitudinal direction of the leg frame so that that the second end 36 of the auxiliary support is movable to be aligned with the second end 33 of the leg frame, *i.e.* to a transport position, or to a distance from it, *i.e.* to a supporting position.

In the embodiment of Figs. 1 to 8, the leg frame 31 is provided with a backlash compensator 37 , and the auxiliary support 34 is provided with a backlash compensator 38. The backlash compensator 37 for the leg frame and the backlash compensator 38 for the auxiliary support are, like the above mentioned parts of the frame portion 20 movable in relation to each other (the spacer 22 for the shield fastener 21 and the position fastener), preferably made of a material having a slippery surface, such as *e.g.* PE, PP, PVC, PS, PS-HI, PET-A, or PTFE plastic. In the embodiment of Figs. 1 to 8, the backlash compensator 38 for the auxiliary support 34 is a piece extending a distance from the first end 35 in the direction of the second end 36 of the auxiliary support 34 and having a cross-section in the shape of the cross-section of the auxiliary support, to accommodate the auxiliary support 31. The backlash compensator 37 for the leg frame is, in the embodiment of Figs. 1 to 8, a piece fitted in the second end 33 of the leg frame 31, having the shape of the cross-section of the leg frame 31 (and thereby also the auxiliary support 34), and extending a distance from the second end 33 in the direction of the first end 32 of the leg frame. Thus, both backlash compensators 37 and 38 have the same outer and inner dimensions, but the backlash compensator 38 for the auxiliary support is fastened to the auxiliary support 34 (outside the auxiliary support), and the backlash compensator 37 for the leg frame is attached to the leg frame 31 (inside the leg frame 31). Because the leg frame 31 is not fastened to the backlash compensator 38 for the auxiliary support, and the auxiliary support 34 is not fastened to the backlash compensator 37 for the leg frame, the auxiliary support 34 is movable within the leg frame 31 a distance determined by the length of the backlash compensators 37 and 38, as shown in e.g. Figs. 6 and 7, so that when the auxiliary support 34 is fitted completely within the leg frame 31 (*i.e.* the leg portion 30 is in the transport position shown in Fig. 7), the backlash compensator 38 for the auxiliary support is against the end piece 39 at the first end 32 of the leg frame, and when the auxiliary support 34 is maximally pulled out of the leg frame 31 (*i.e.* the leg portion 30 is in the supporting position shown in Fig. 6), the backlash compensators 37 and 38 are against each other within the leg frame. Thus, as shown in Figs. 6, 7 and 8, the backlash compensators 37 and 38 determine the length of movement of the auxiliary support 34, *i.e.* the distance that the auxiliary support 34 can be pulled out of the leg frame 31 when the leg portion 30 is converted from the transport position to the supporting position. The function of the backlash compensators 37 and 38 is not only to keep the auxiliary support within the leg frame 31 but also to secure that there is no backlash in the auxiliary support when it is fitted in the leg frame 31 and thus to prevent turning/springing of the auxiliary support with respect to the leg frame 31, causing instability. Furthermore, by their slippery surface, the backlash compensators 37 and 38 secure the easy movability of the auxiliary support 34 with respect to the leg frame 31 and thereby the smooth functionality of the leg portion 30.

In the embodiment of Figs. 1 to 8, the first end 32 of the leg frame 31 is provided with an end piece 39 with a support protrusion 41, and the second end 36 of the auxiliary support 34 is provided with an end piece 40 with a support protrusion 42. The function of the support protrusions 41 and 42 is to secure that the first end 32 of the leg frame and the second end 36 of the auxiliary support lean against the ground when the leg portion 30 is in the supporting position and placed against the ground. Moreover, the support protrusions 41 and 42 prevent other parts of the leg frame 31 and the auxiliary support 34 from rubbing against the ground during use of the support leg 10 for the shield. Further, the end piece 40 at the second end of the auxiliary support 34 is provided with a grip protrusion 43 extending in a direction (upwards) opposite to the support protrusion 42, to facilitate the pulling out of the auxiliary support 43 from the inside of the leg frame 31 when the leg portion 30 of the support leg 10 for the shield is brought from the transport position to the supporting position.

Magnets are used to secure the position of the auxiliary support 34 when the support leg 10 for the shield is in the transport position in the embodiment of Figs. 1 to 8. For this purpose, a magnet M3 is provided at the first end 32 of the leg frame, and a magnet M4 is provided at the first end 35 of the auxiliary support, opposite poles of the magnets facing each other (*i.e.* the magnets attracting each other). The magnet M3 at the first end 32 of the leg frame is attached, as shown in Figs. 6 and 7, to the end piece 39 at the first end 32 of the leg frame, and the magnet M4 at the first end 35 of the auxiliary support is attached to the end of the backlash compensator 38 for the auxiliary support, on the side of the first end 35 of the auxiliary support. A corresponding attachment of the auxiliary support to the leg frame 31 in the transport position, implemented by magnets, can also be implemented by a single magnet in this embodiment and in other embodiments of the support leg for a shield according to the invention. Thus, the magnet is provided either at the first end of the leg frame or at the first end of the auxiliary support, and either the first end of the leg support or the first end of the auxiliary support is provided with a piece of another ferromagnetic material, or the end piece of the leg frame or the backlash compensator for the auxiliary support is, in whole or in part, made of a ferromagnetic material.

The end pieces 41 and 42 at the first end 32 of the leg frame and at the second end 36 of the auxiliary support may be made of a plastic or a metal. If the fastening of the first end of the auxiliary support to the first end of the leg frame is implemented by means of a single magnet at the first end of the auxiliary support, the end piece of the leg support may be made of a ferromagnetic material (that is, for example steel or iron). The fastening of these end pieces to the leg frame 31 and the auxiliary support 34 is secured by means of either gluing and/or an interference fit.

When the support leg 10 for a shield shown in Figs. 1 to 8 is used for supporting a ballistic shield, at least one support leg 10 for a shield but normally preferably at least two support legs are fastened to the shield. However, supporting can be implemented by a single support leg 10 for a shield, if the shield comprises other supporting means for supporting it in the direction of the plane formed by the shield.

Figures 9 and 10 illustrate supporting a shield 50 by two support legs 10 for a shield, shown in Figs. 1 to 8. The support leg 10 for a shield is fastened to the shield 50 at its shield fastener 21, for example by welding or by means of fastening screws at fastening lugs thus provided in the shield fastener 21, or by means of a separate clip which is clamped around the shield fastener 21 when the fastening screws are tightened.

When the shield 50 equipped with support legs 10 for the shield is to be placed in an upright position against the ground, the leg portion 30 is turned from the position shown in Fig. 9 by turning the shield fastener 21 first 90 degrees with respect to the longitudinal axis I of the frame portion 20 so that the leg portion 30 is turned to a position perpendicular to the shield 50, shown in Fig. 10. After this, the auxiliary support 34 of the leg portion 30 of each support leg 10 for a shield is pulled out of the leg frame 31 (that is, from the transport position shown in Figs. 2 and 7 to the supporting position shown in Figs. 1 and 6) After this, the shield 50 can be placed in a desired location against the ground, in an upright position supported by the leg portions 30. If necessary, the auxiliary supports 34 of the leg portions 30 can be adjusted in the length direction of the leg portions 30, if a better support is achieved with a leg portion 30 shorter than the full length of the leg portion 30, for example because of an uneven surface or the shape of the ground. To bring the support leg 10 for a shield to a transport position for transporting the shield 50, the leg portion 30 of each support leg 10 is first retracted to the transport position and then turned with respect to the longitudinal axis I of the frame portion so that the leg portion 30 is returned to be parallel with the plane formed by the shield 50, below the shield, as shown in Fig. 9.

The support leg for a shield according to the invention may be implemented, in many respects, in a way different from the embodiment example shown in Figs. 1 to 8. Figure 11 shows a support leg for a shield which corresponds to the embodiment of Figs. 1 to 8 in other respects but in which the frame portion 20 and the leg portion 30 are both formed of pipes having a circular cross section. Figure 12 shows a shield 50 equipped with two support legs 10 according to Fig. 11. In an embodiment of a support leg for a shield according to the invention, the frame portion may comprise a telescopic structure as well. Thus, the frame part may be adjustable, for example, to a retracted position and an extended position, or between these, in the same way as the leg portion. Furthermore, in an embodiment, the leg portion may comprise a lateral support turnable from the leg frame to a perpendicular position with respect to its longitudinal direction (that is, in the same horizontal plane with the leg portion). Thus, not more than one support leg for a shield is necessary for supporting the shield in two directions, because the leg portion of the support leg also supports the frame portion in the perpendicular direction of the leg portion. Consequently, the support leg for a shield according to the invention is not limited to the example embodiments presented above, but it may vary within the scope of the appended claims.

## Claims

1. A support leg (10) for a shield, comprising an elongated frame portion (20) to be fastened to a shield (50), the frame portion (20) having a first end (25) and a second end (26), as well as a leg portion (30) fastened at the second end (26) of the frame portion (20), primarily perpendicularly with respect to the frame portion (20), wherein
- the frame portion (20) comprises a shield fastener (21) to which the shield can be fastened and which shield fastener (21) is turnable to at least two different positions with respect to at least the longitudinal direction (I) of the frame portion (20), and lockable in the at least two different positions in a releasable way;
- the leg portion (30) comprises an elongated leg frame (31) with a first end (32) and a second end (33), **characterized in that** the leg portion (30) comprises an auxiliary support (34) with a first end (35) and a second end (36), and **in that**
- the auxiliary support (34) is arranged in connection with the leg frame (31) to be telescopically movable back and forth in the longitudinal direction of the leg frame (31) so that the auxiliary support (34) is movable to a transport position, in which the second end (36) of the auxiliary support (34) is substantially aligned with the second end (33) of the leg frame (31), and from this position to a supporting position, in which the second end (36) of the auxiliary support (34) is spaced from the second end (33) of the leg frame (31).

2. The support leg (10) for a shield according to claim 1, wherein the frame portion (20) and the leg portion (30) are tubular pieces.

3. The support leg (10) for a shield according to claim 2, wherein the auxiliary support (34) is a tubular piece with outer dimensions fitting within the leg frame (31).

4. The support leg (10) for a shield according to any of the preceding claims, wherein the frame portion (20) and the leg portion (30) have rectangular cross-sections.

5. The support leg (10) for a shield according to any of the claims 1 to 3, wherein the frame portion (20) and the leg portion (30) have circular cross-sections.

6. The support leg (10) for a shield according to any of the preceding claims, wherein a magnet (M3) is provided at the first end (32) of the leg frame (31) and/or a magnet (M4) is provided at the first end (35) of the auxiliary support (34) so that when the leg portion (30) is in the transport position, the leg frame (31) and the auxiliary support (34) are attached to each other by means of said magnets (M3, M4).

7. The support leg (10) for a shield according to any of the preceding claims, wherein the leg frame (31) is provided with a backlash compensator (37), and the auxiliary support (34) is provided with a backlash compensator (38), for eliminating backlashes between the auxiliary support (34) and the leg frame (31) and for restricting the range of movement of the auxiliary support (34).

8. The support leg (10) for a shield according to any of the preceding claims, wherein the first end (32) of the leg frame (31) is provided with an end piece (39) with a support protrusion (41), and the second end (36) of the auxiliary support (34) is provided with an end piece (40) with a support protrusion (42).

9. The support leg (10) for a shield according to claims 6 and 8, wherein the magnet (M3) at the first end (32) of the leg frame (31) is provided in the end piece (39) at the first end (32) of the leg frame (31).

10. The support leg (10) for a shield according to any of the preceding claims, wherein the frame portion (20) comprises a position fastener (23) provided in the shield fastener (21), with respect to which position fastener (23) the shield fastener (21) is turnable in relation to the longitudinal direction (I) of the frame portion (20) and movable a distance in the longitudinal direction (I) of the frame portion (20).

11. The support leg (10) for a shield according to claim 10, wherein the frame portion (30) comprises a position lock (24) providing a shape interlocking, to which position lock (24) the shield fastener (21) can be fitted by moving the shield fastener (21) in the longitudinal direction of the frame portion (20) for locking its turning movement in a releasable way.

12. The support leg (10) for a shield according to claim 10 or 11, wherein an end piece (28) is provided at the end of the shield fastener (21) on the side of the first end (25) of the frame portion (20) and attached to the position fastener (23) in a detachable way, for keeping the shield fastener (21) in its place on the frame portion (20).

13. The support leg (10) for a shield according to claim 12, wherein the end piece (28) is provided with a magnet (M1), and the end of the position fastener (23) on the side of the first end (25) of the frame portion (20) is provided with a magnet (M2) for locking the movement of the shield fastener (21) in the longitudinal direction of the frame portion (20) in a releasable way when the shield fastener (21) is fitted to the position fastener (23).

14. The support leg (10) for a shield according to any of the claims 10 to 13, wherein an end piece fastener (27) is provided at the end of the position fastener (23) on the side of the first end (25) of the frame portion (20), configured to restrict the movement of the shield fastener (21) in the longitudinal direction of the frame portion (20) and thereby to prevent the detachment of the shield fastener (21) from the position fastener (23).

15. A ballistic shield (50) with a support leg, **characterized in that** at least one support leg (10) of the ballistic shield (50) is a support leg (10) according to any of the claims 1 to 14.

## Patentansprüche

1. Ein Stützfuß (10) für einen Schild, der einen länglichen Gestellabschnitt (20) umfasst, der an einem Schild (50) zu befestigen ist, wobei der Gestellabschnitt (20) ein erstes Ende (25) und ein zweites Ende (26) sowie einen Fußabschnitt (30) aufweist, der an dem zweiten Ende (26) des Gestellabschnitts (20) befestigt ist und zwar hauptsächlich senkrecht zu dem Gestellabschnitt (20), wobei
- der Gestellabschnitt (20) ein Schildbefestigungselement (21) umfasst, an dem das Schild befestigt werden kann, und wobei das Schildbefestigungselement (21) in Bezug auf mindestens die Längsrichtung (I) des Gestellabschnitts (20) in mindestens zwei verschiedene Positionen gedreht werden kann und in den mindestens zwei verschiedenen Positionen auf lösbare Weise verriegelt werden kann;
- der Fußabschnitt (30) ein längliches Fußgestell (31) mit einem ersten Ende (32) und einem zweiten Ende (33) umfasst, **dadurch gekennzeichnet, dass** der Fußabschnitt (30) eine Hilfsstütze (34) mit einem ersten Ende (35) und einem zweiten Ende (36) umfasst, und dadurch, dass
- die Hilfsstütze (34) in Verbindung mit dem Fußgestell (31) so angeordnet ist, dass sie in Längsrichtung des Fußgestells (31) teleskopisch hin- und herbewegt werden kann, so dass die Hilfsstütze (34) in eine Transportposition, in der das zweite Ende (36) der Hilfsstütze (34) im Wesentlichen mit dem zweiten Ende (33) des Fußgestells (31) ausgerichtet ist, und aus dieser Position in eine Stützposition bewegt werden kann, in der das zweite Ende (36) der Hilfsstütze (34) von dem zweiten Ende (33) des Fußgestells (31) beabstandet ist.

2. Der Stützfuß (10) für einen Schild nach Anspruch 1, wobei der Gestellabschnitt (20) und der Fußabschnitt (30) rohrförmige Teile sind.

3. Der Stützfuß (10) für einen Schild nach Anspruch 2, wobei die Hilfsstütze (34) ein rohrförmiges Teil ist, dessen Außenabmessungen in das Fußgestell (31) passen.

4. Der Stützfuß (10) für einen Schild nach einem der vorangegangenen Ansprüche, wobei der Gestellabschnitt (20) und der Fußabschnitt (30) rechteckige Querschnitte aufweisen.

5. Der Stützfuß (10) für einen Schild nach einem der Ansprüche 1 bis 3, wobei der Gestellabschnitt (20) und der Fußabschnitt (30) kreisförmige Querschnitte aufweisen.

6. Der Stützfuß (10) für einen Schild nach einem der vorangegangenen Ansprüche, wobei ein Magnet (M3) am ersten Ende (32) des Fußgestells (31) und/oder ein Magnet (M4) am ersten Ende (35) der Hilfsstütze (34) vorgesehen ist, so dass beim Transport des Fußabschnitts (30) das Fußgestell (31) und die Hilfsstütze (34) mittels der Magnete (M3, M4) aneinander befestigt sind.

7. Der Stützfuß (10) für einen Schild nach einem der vorangegangenen Ansprüche, wobei das Fußgestell (31) mit einem Spielausgleicher (37) und die Hilfsstütze (34) mit einem Spielausgleicher (38) versehen ist, um ein Spiel zwischen der Hilfsstütze (34) und dem Fußgestell (31) zu beseitigen und den Bewegungsbereich der Hilfsstütze (34) zu begrenzen.

8. Der Stützfuß (10) für ein Schild nach einem der vorangegangenen Ansprüche, wobei das erste Ende (32) des Fußgestells (31) mit einem Endstück (39) mit einem Stützvorsprung (41) und das zweite Ende (36) der Hilfsstütze (34) mit einem Endstück (40) mit einem Stützvorsprung (42) versehen ist.

9. Der Stützfuß (10) für ein Schild nach Anspruch 6 und 8, wobei der Magnet (M3) am ersten Ende (32) des Fußgestells (31) in dem Endstück (39) am ersten Ende (32) des Fußgestells (31) vorgesehen ist.

10. Der Stützfuß (10) für einen Schild nach einem der vorangegangenen Ansprüche, wobei der Gestellabschnitt (20) ein in der Schildbefestigung (21) vorgesehenes Positionsbefestigungselement (23) umfasst, wobei das Schildbefestigungselement (21) in Bezug auf das Positionsbefestigungselement (23) in Längsrichtung (I) des Gestellabschnitts (20) drehbar und um eine Strecke in Längsrichtung (I) des Gestellabschnitts (20) beweglich ist.

11. Der Stützfuß (10) für einen Schild nach Anspruch 10, wobei der Gestellabschnitt (30) eine Positionsverriegelung (24) umfasst, die eine Formverriegelung bietet, an welcher Positionsverriegelung (24) das Schildbefestigungselement (21) angebracht werden kann, indem das Schildbefestigungselement (21) in Längsrichtung des Gestellabschnitts (20) bewegt wird, um seine Drehbewegung lösbar zu blockieren.

12. Der Stützfuß (10) für einen Schild nach Anspruch 10 oder 11, wobei ein Endstück (28) am Ende des Schildbefestigungselements (21) auf der Seite des ersten Endes (25) des Gestellabschnitts (20) vorgesehen und lösbar an dem Positionsbefestigungselement (23) angebracht ist, um das Schildbefestigungselement (21) an seinem Platz am Gestellabschnitt (20) zu halten.

13. Der Stützfuß (10) für einen Schild nach Anspruch 12, wobei das Endstück (28) mit einem Magneten (M1) versehen ist und das Ende des Schildbefestigungselements (23) auf der Seite des ersten Endes (25) des Gestellabschnitts (20) mit einem Magneten (M2) versehen ist, um die Bewegung des Schildbefestigungselements (21) in der Längsrichtung des Gestellabschnitts (20) lösbar zu blockieren, wenn das Schildbefestigungselement (21) an dem Positionsbefestigungselement (23) angebracht ist.

14. Der Stützfuß (10) für einen Schild nach einem der Ansprüche 10 bis 13, wobei am Ende des Schildbefestigungselements (23) auf der Seite des ersten Endes (25) des Gestellabschnitts (20) ein Endstückbefestigungselement (27) vorgesehen ist, das so konfiguriert ist, dass es die Bewegung des Schildbefestigungselements (21) in der Längsrichtung des Gestellabschnitts (20) einschränkt und dadurch das Lösen des Schildbefestigungselements (21) von dem Positionsbefestigungselement (23) verhindert.

15. Ein ballistischer Schild (50) mit einem Stützfuß, **dadurch gekennzeichnet, dass** mindestens ein Stützfuß (10) des ballistischen Schildes (50) ein Stützfuß (10) nach einem der Ansprüche 1 bis 14 ist.

## Revendications

1. Jambe de support (10) pour un bouclier, comprenant une partie de cadre allongée (20) destinée à être fixée à un bouclier (50), la partie de cadre (20) ayant une première extrémité (25) et une seconde extrémité (26), ainsi qu'une partie de jambe (30) fixée à la seconde extrémité (26) de la partie de cadre (20), principalement perpendiculairement par rapport à la partie de cadre (20), dans laquelle
- la partie de cadre (20) comprend une attache de bouclier (21) à laquelle le bouclier peut être fixé et laquelle attache de bouclier (21) peut tourner dans au moins deux positions différentes par rapport à au moins la direction longitudinale (I) de la partie de cadre (20) et verrouillable dans au moins deux positions différentes de manière libérable ;
- la partie de jambe (30) comprend un cadre de jambe allongé (31) avec une première extrémité (32) et une seconde extrémité (33), **caractérisée en ce que** la partie de jambe (30) comprend
un support auxiliaire (34) avec une première extrémité (35) et une seconde extrémité (36), et **en ce que**
- le support auxiliaire (34) est agencé en liaison avec le cadre de jambe (31) pour être mobile d'avant en arrière de manière télescopique dans la direction longitudinale du cadre de jambe (31) de sorte que le support auxiliaire (34) soit mobile vers une position de transport, dans laquelle la seconde extrémité (36) du support auxiliaire (34) est sensiblement alignée avec la seconde extrémité (33) du cadre de jambe (31), et de cette position vers une position de support, dans laquelle la seconde extrémité (36) du support auxiliaire (34) est espacé de la seconde extrémité (33) du cadre de jambe (31) .

2. Jambe de support (10) pour un bouclier selon la revendication 1, dans laquelle la partie de cadre (20) et la partie de jambe (30) sont des pièces tubulaires.

3. Jambe de support (10) pour un bouclier selon la revendication 2, dans laquelle le support auxiliaire (34) est une pièce tubulaire dont les dimensions extérieures s'ajustent à l'intérieur du cadre de jambe (31).

4. Jambe de support (10) pour un bouclier selon l'une quelconque des revendications précédentes, dans laquelle la partie de cadre (20) et la partie de jambe (30) ont des sections transversales rectangulaires.

5. Jambe de support (10) pour un bouclier selon l'une quelconque des revendications 1 à 3, dans laquelle la partie de cadre (20) et la partie de jambe (30) ont des sections transversales circulaires.

6. Jambe de support (10) pour un bouclier selon l'une quelconque des revendications précédentes, dans laquelle un aimant (M3) est prévu à la première extrémité (32) du cadre de jambe(31) et/ou un aimant (M4) est prévu à la première extrémité (35) du support auxiliaire (34) de sorte que lorsque la partie de jambe (30) est en position de transport, le cadre de jambe (31) et le support auxiliaire (34) sont fixés l'un à l'autre au moyen desdits aimants (M3, M4).

7. Jambe de support (10) pour un bouclier selon l'une quelconque des revendications précédentes, dans laquelle le cadre de jambe (31) est pourvu d'un compensateur de jeu (37), et le support auxiliaire (34) est pourvu d'un compensateur de jeu (38), pour éliminer les jeux entre le support auxiliaire (34) et le cadre de jambe (31) et pour limiter la plage de mouvement du support auxiliaire (34) .

8. Jambe de support (10) pour un bouclier selon l'une quelconque des revendications précédentes, dans laquelle la première extrémité (32) du cadre de jambe (31) est pourvue d'un embout (39) avec une saillie de support (41), et le la seconde extrémité (36) du support auxiliaire (34) est pourvue d'un embout (40) avec une saillie de support (42).

9. Jambe de support (10) pour un bouclier selon les revendications 6 et 8, dans laquelle l'aimant (M3) au niveau de la première extrémité (32) du cadre de jambe (31) est prévu dans l'embout (39) au niveau de la première extrémité (32) du cadre de jambe (31).

10. Jambe de support (10) pour un bouclier selon l'une quelconque des revendications précédentes, dans laquelle la partie de cadre (20) comprend une attache de position (23) prévue dans l'attache de bouclier (21),
par rapport à laquelle attache de position (23) l'attache de bouclier (21) peut tourner par rapport à la direction longitudinale (I) de la partie de cadre (20) et est mobile sur une certaine distance dans la direction longitudinale (I) de la partie de cadre (20).

11. Jambe de support (10) pour un bouclier selon la revendication 10, dans laquelle la partie de cadre (30) comprend un verrou de position (24) fournissant un verrouillage de forme, sur lequel verrou de position (24) l'attache de bouclier (21) peut être ajustée en déplaçant l'attache de bouclier (21) dans la direction longitudinale de la partie de cadre (20) pour verrouiller son mouvement de rotation de manière libérable.

12. Jambe de support (10) pour un bouclier selon la revendication 10 ou 11, dans laquelle un embout (28) est prévu à l'extrémité de l'attache de bouclier (21) du côté de la première extrémité (25) de la partie de cadre (20) et fixé à l'attache de position (23) de manière détachable, pour maintenir l'attache de bouclier (21) à sa place sur la partie cadre (20).

13. Jambe de support (10) pour un bouclier selon la revendication 12, dans laquelle l'embout (28) est pourvu d'un aimant (M1), et l'extrémité de l'attache de position (23) sur le côté de la première extrémité (25) de la partie de cadre (20) est pourvu d'un aimant (M2) pour verrouiller le mouvement de l'attache de bouclier (21) dans la direction longitudinale de la partie de cadre (20) de manière libérable lorsque l'attache de bouclier (21) est installée sur l'attache de position (23).

14. Jambe de support (10) pour un bouclier selon l'une quelconque des revendications 10 à 13, dans laquelle une attache d'embout (27) est prévue à l'extrémité de l'attache de position (23) du côté de la première extrémité (25) de la partie de cadre (20), configurée pour restreindre le mouvement de l'attache de bouclier (21) dans la direction longitudinale de la partie de cadre (20) et ainsi empêcher le détachement de l'attache de bouclier (21) de l'attache de position (23).

15. Bouclier balistique (50) avec une jambe de support, **caractérisé en ce qu'**au moins une jambe de support (10) du bouclier balistique (50) est une jambe de support (10) selon l'une quelconque des revendications 1 à 14.
